# EUROPÄISCHE PATENTANMELDUNG

(11) **EP 0 844 578 A1**
(43) Veröffentlichungstag der Anmeldung: **27.05.1998**
(21) Anmeldenummer: 97119956.7
(22) Anmeldetag: 14.11.1997
(51) Int. Cl.: G06F 17/60, G02F 1/01, G09F 9/35

(54) **Elektronisches Eitikett**

(30) Priorität: 26.11.1996 DE 19648937
(71) Anmelder: Meonic System Engineering GmbH, 99097 Erfurt (DE)
(72) Erfinder: Roscher, Dietrich, Dr.Ing., 99097 Erfurt (DE)
(74) Vertreter: Enders, Hans

(57) **Zusammenfassung**

Elektronisches Etikett zur Warenkennzeichnung an Warenträgern, das veränderbare alphanumerische und numerische Informationen anzeigt, mit einer Zentrale in Verbindung steht, von dieser Informationen erhält, gekennzeichnet durch mehrere verschiedene Anzeigebereiche, die in der Frontplatte eines Lichtleitkörpers angeordnet sind und daß der Lichtleitkörper durch Umlenkung des auf die Frontplatte einfallenden Lichtes eine energiearme Hintergrundbeleuchtung darstellt. Die Frontplatte des Lichtleitkörper weist dazu Streuzentren aus floureszierenden Material auf. Für den Austritt des Lichtes sind spezielle optische Flächen angeordnet.

## Beschreibung

Die Erfindung betrifft ein elektronisches Etikett, das zur Warenkennzeichnung an Warenträgern veränderbare alphanumerische und numerische Informationen anzeigt.

Gedruckte Etiketten zur Warenkennzeichnung unterliegen in unregelmäßigen Zeitabständen einer Änderung. Der manuelle Aufwand ist beträchtlich, und so wurden elektronische Preisauszeichnungsetiketten vorgeschlagen und bekannt, die von einer Zentrale geändert werden. Um keinen hohen Installationsaufwand entstehen zu lassen, besitzen die meisten dieser elektronischen Etiketten eine eigene Energieversorgung z.B. über Solarzellen. Die Informationsübertragung zum Etikett erfolgt über Funk oder mittels Infrarot. Als Anzeige werden wegen des niedrigen Energiebedarfs LCD-Anzeigen eingesetzt. Bekannte Regaletiketten zeigen numerische Informationen zu ein oder mehreren Preisen sowie Mengen- und sonstige Verwaltungsinformationen für den Betreiber des Regaletikettensystems. Alphanumerische Informationen werden, wenn überhaupt, in Form von in der Anzeige fest programmierter Wörter oder Zeichen durch Zuschalten eines Steuersignals sichtbar gemacht. Durch die Einschränkung eines niedrigen Energiehaushaltes sind frei programmierbare aplhanumerische Anzeigen durch ihren trotz LCD-Technik höheren Energiebedarfs problematisch. Der die Anzeige steuernde Controller muß ständig in einem bestimmten Zeitablauf alle Anzeigepixel ansteuern und eine Kapazität umladen. Durch die Vielzahl der Pixel und Betrieb über die gesamte Betriebsdauer ist der Bedarf an elektrischer Leistung so hoch, daß großflächige Solarzellen oder Batterien eingesetzt werden müssen. Bedingt durch die höhere Anzahl von Pixeln bei alphanumerischen Zeichen werden zudem durch die Ansteuerung mit einer höheren Multiplexrate die Lesbarkeit der Anzeige durch einen niedrigeren Kontrast schlechter. Das betrifft sowohl das Kontrastempfinden des menschlichen Auges bei Betrachtung in der vorgesehenen optischen Achse der Anzeige, als auch der Kontrastabfall bei Abweichung von der idealen Achse, das heißt die Seitenerkennbarkeit der Anzeige. Eine der Lesbarkeit der Anzeige dienliche Hintergrundbeleuchtung der Anzeige wird ebenfalls bei bekannten elektronischen Etiketten bisher nicht vorgenommen.

Das Fehlen einer von der Zentrale steuerbaren alphanumerischen Anzeige führt nun dazu, daß bekannte elektronische Etiketten mit einem zusätzlichen, bedruckten Papieraufkleber versehen werden, um den interessierten Käufer der Ware eine eindeutige Beziehung zwischen elektronischen Etikett und der ausgezeichneten Ware zu vermitteln. In anderen Fällen muß die Anordnung des elektronischen Etikettes an einem Warenträger so eindeutig sein, daß ein Irrtum ausgeschlossen ist. In jedem Fall bedeutet aber das Fehlen einer durch die Zentrale steuerbaren alphanumerischen Information eine wesentliche Einschränkung der Anwendung bzw. zusätzliche Kosten für den Betrieb einer mit derartigen Etiketten ausgestatteten Verkaufseinrichtung.

Der Erfindung liegt die Aufgabe zu grunde, ein elektronisches Etikett der eingangs genannten Art zu schaffen, daß numerische und zugleich alphanumerische Informationen geichzeitig darstellen kann und diese Informationen durch eine Zentrale verändert werden können, durch eine Hintergrundbeleuchtung eine hohe Erkennbarkeit auch bei Abweichung vom idealen Betrachtungswinkel gewährleistet und zugleich energiesparend wirksam ist.

Die Aufgabe wird erfindungsgemäß dadurch gelöst, daß ein Lichtleitkörper verwendet wird, der das auf das elektronische Etikett auftreffende Umgebungslicht im gesamten Spektralbereich aufnimmt, in Licht einer Vorzugswellenlänge umwandelt und gerichtet den Schaltzellen für die Pixel einer alphanumerischen Anzeige und den Segmenten einer numerischen Anzeige zuführt und das die Schaltzellen sowie der steuernde Controller lediglich in den Zeiten aktiv ist, wenn eine Veränderung der angezeigten Information gewünscht ist.

Bekanntlich ist der Kontrasteindruck von zwei angrenzenden Flächen (z.B. Pixel eines Zeichens und Umgebung) abhängig von der unterschiedlichen Beleuchtungsstärke der Abbildung dieser Flächen auf der Netzhaut des menschlichen Auges. Beide Flächen wirken als indirekte Leuchtquellen, deren Leuchtdichte zusammen mit der Apertur des menschlichen Auges im Zusammenhang mit der empfundenen Beleuchtungsstärke stehen. Im Fall einer LCD-Anzeige wird die Pixelumgebung durch das Umgebungslicht beleuchtet. Ein Teil des Lichtes wird insbesondere in den für die Anzeige notwendigen Polarisationsfiltern und im Flüssigkristall absorbiert, der andere Teil mehr oder weniger diffus reflektiert. Der reflektierte Lichtstrom wird dabei in die gesamte Umgebung abgestrahlt mit einer Verteilung, die typisch für die lichttechnischen Eigenschaften der Beschichtung des Anzeigehintergrundes ist.. Nur ein kleiner, durch die Augenapertur ausgeschnittener Teil wird dabei durch das Auge empfangen und als Helligkeitseindruck vermerkt. In dem aktivierten Pixel wird dagegen die Polarisationsebene des Flüssigkristalls durch Anlegen eines elektrischen Feldes in der Schaltzelle gedreht, so daß das reflektierte Licht in der Polarisationsfilteranordnung ausgelöscht wird und somit ein Kontrasteindruck entsteht. Wird nun das auf das elektronische Etikett auffallende Umgebungslicht in einem optischen System aufgefangen und gerichtet hinter die Schaltzelle geführt, ist der Helligkeitseindruck durch Vermeiden einer diffusen Reflektion wesentlich höher. Die Verteilungskurve der Lichtstärke kann durch die Austrittsapertur des Lichtleitkörpers auf das Raumsegment begrenzt werden, in welchem üblicherweise die Betrachtung des Etiketts erfolgt.

Ein weiterer, das Kontrastempfinden positiv beeinflussender Effekt besteht darin, daß die Schaltzelle lediglich dann und nur dann Licht aus dem Lichtleitkörper entnimmt, wenn der betreffende Pixel durch den Anzeigecontroller aktiviert worden ist. Erfindungsgemäß wird die Aufgabe dadurch gelöst, daß die Leitung des Lichtes im Lichtleitkörper durch Totalreflektion an den Seitenwänden nahezu verlustfrei erfolgt. Die Auskopplung des Lichtes erfolgt dadurch, daß die Totalreflektion durch die angesteuerte Schaltzelle unterbrochen und damit eine Auskopplung des Lichtes erfolgt. Verwendet wird dafür ein STP-Polymer, der sich durch Anlegen eines elektrischen Feldes und mit Hilfe eingelagerter Streukörper von einem durchsichtigen Zustand in einen trüben Zustand umsteuern läßt. Streuanteile werden entweder wieder durch Reflektion in den total reflektierten Lichtstrom im Lichtleitkörper zurückgeführt bzw. zur Erzeugung des Helligkeitseindruckes ausgekoppelt.

Eine weitere Verbesserung des Kontrasteindruckes kann erreicht werden, wenn durch Einlagerungen von floureszierenden Partikeln in den Lichtleitkörper eine spektrale Umwandlung des gesamten Wellenlängenbereiches auf das Licht in einem Wellenlängenbereich erfolgt, in dem das Auge besonders empfindlich ist. Damit kann eine optimale Anpassung der in Verkaufsstätten oft typischen Beleuchtung mit Leuchtstofflampen mit hohen kurzwelligen Anteilen auf die besonders angenehm und hell empfundenen Wellenlängen 550 nm bis 650 nm (grün und orange) erfolgen. Gleichzeitig können damit durch Beleuchtung mit UV-Lampen auch Effektdarstellung stark selbstleuchtendender Anzeigen in nahezu abgedunkelten Räumen realisiert werden.

In einer anderen erfindungsgemäßen Ausführung wird ein anderer Typ eines STP-Polymers verwendet, dessen Einfärbung sich durch Anlegen eines elektrischen Feldes von glasklar auf eine bestimmte Farbe ändert. Zusammen mit der Leitung von Licht mit einer Vorzugswellenlänge im Lichtleitkörper ergibt sich die Möglichkeit, durch Umschalten des STP-Polymers in eine Komplementärfarbe eine nahezu vollständige Absorbtion des durch die Schaltzelle ausgesendeten Lichtes zu erreichen. Allerdings müssen bei dieser Anordnung alle Pixel beleuchtet werden, bei den dunkel zu steuernden Pixel wird in der beschriebenen Art das Licht absorbiert.

In der Eigenschaft von STP-Polymeren ist es begründet, das sie verschiedene temperaturabhängige Phasen besitzen. Lediglich in der nematischen Phase lassen sich durch Anlegen eines elektrischen Feldes die optischen Eigenschaften wie Änderung von glasklar auf trüb, glasklar auf Einfärbung oder Drehung der Polarisationsebene ändern. Die Übergangstemperaturen von einer Phase in die andere lassen sich durch chemische Beimengen in bestimmten Grenzen verändern. Diese Möglichkeit wird in einem weiteren erfindungsgemäßen Merkmal genutzt.

Dazu wird der STP-Polymer durch Beimengungen so eingestellt, daß im Raumtemperaturbereich bis z.B. max 40°C der Polymer sich im festen Zustand befindet. Der Zustand der Schaltzellen ist gewissermaßen hinsichtlich der optischen Eigenschaften eingefroren. Damit bleibt die Anzeige auch dann erhalten, wenn sie von der Energieversorgung gänzlich getrennt wird.

Bei der Analyse der Anwendungsbedingungen von elektronischen Etiketten wird deutlich, daß die angezeigten Informationen nur relativ selten geändert werden, so z.B. die Preisinformation maximal einmal pro Tag, die Artikelbezeichnung sogar nur maximal einmal pro Monat. Somit besteht nur bei Änderung der Anzeigeinformation die Notwendigkeit, das elektronische Etikett zu aktivieren. Erfindungsgemäß wird das elektronische Etikett bei Empfang eines Aktivierungssignals in einen Zustand versetzt, in dem die Anzeigeinformation verändert werden kann. Nach erfolgter Aktivierung wird nun die Information durch die Zentrale dem elektronischen Etikett übertragen, die das Etikett anzeigen soll. Der im elektronischen Etikett eingebaute Controller ermittelt die Pixelpunkte, die hinsichtlich ihrer optischen Eigenschaften verändert werden müssen. Anschließend werden die betreffenden Schaltzellen erwärmt, wodurch der STP-Polymer in die flüssige Phase gerät. Durch Anlegen eines elektrischen Feldes werden nun die optischen Eigenschaften geändert. Nach Abkühlen der Schaltzelle ist der neue optische Zustand gefroren und bleibt über einen langen Zeitraum auch ohne Ansteuerung erhalten.

Die Erfindung soll anhand eines Ausführungsbeispiels näher beschrieben werden

Es zeigen:
- Fig. 1:: Frontansicht des elektronischen Etikettes
- Fig. 2:: Prinzipdarstellung zum Aufbau des Etikettes
- Fig. 3:: Schematische Darstellung der Lichtführung im Lichtleitkörper
- Fig. 4:: Lichttechnische Wirkungsweise des halbkugelförmigen Schaltelementes
- Fig. 5:: Lichttechnische Wirkungsweise eines zylindrischen Schaltelements
- Fig. 6:: Elektrodenaanordnung des Schaltelementes
- Fig. 7:: Matrixansteuerung von mehreren Schaltelementen
- Fig. 8:: Signalverläufe für Erhitzung und Steuerfeld

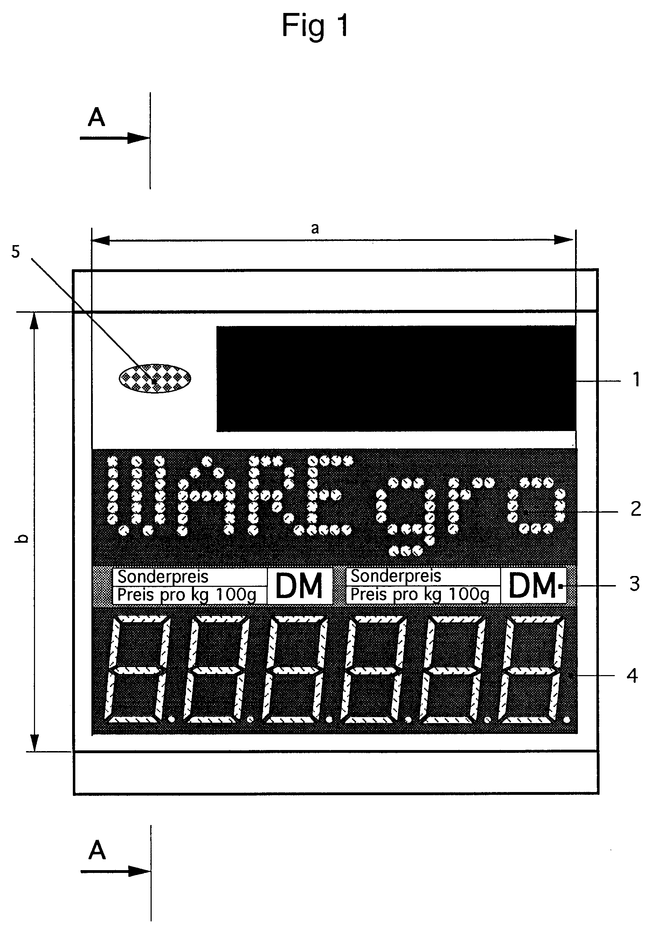

Fig 1 zeigt zunächst den Aufbau des Etikettes in seiner Frontansicht mit den Abmessungen a x b. Vorzugsweise sind drei Anzeigebereiche vorgesehen, die unterschiedliche Bedeutung besitzen. Der Bereich 4 ist vorgesehen für die Anzeige des Preises. Eine typische Anwendung besteht darin, daß ca. einmal pro Tag eine Veränderung der Preisanzeige erfolgt. Üblicherweise sind 6 Stellen ausreichend, um einen hinreichenden Bereich für unterschiedliche Preise zur Verfügung zu haben. Numerische Zeichen lassen sich vorteilhaft hinsichtlich des Ansteueraufwandes als 7-Segmentanzeigen bei guter Lesbarkeit darstellen.

Der Bereich 2 ist dagegen für die Anzeige des Artikeltextes vorgesehen. Eine typische Anwendung besteht darin, daß ca. einmal im Monat eine Veränderung der Anzeige erfolgt. Groß- und Kleinbuchstaben sind wünschenswert, wenn eine gute Lesbarkeit des Artikeltextes erreicht werden soll. Pro Zeichen sind im Minimum 5 x 12 Rasterpunkte erforderlich, um eine einwandfreie Darstellung zu erreichen.

Der Bereich 3 erfüllt eine Sonderfunktion. Hier können auf ein Kommando des Zentralsenders fest programmierte Texte oder Zeichen eingeschaltet werden, die zur Kennzeichnung der Währung oder allgemeinen Informationen dienen.

Über den Anzeigefeldern 1, 2, 3 ist ein Sensor 5 angeordnet, der die Kommunikation mit einer Sendezentrale übernimmt. Neben dem Sensor 5 unterstützt ein Solarelement 1 die Energieversorgung des Etikettes.

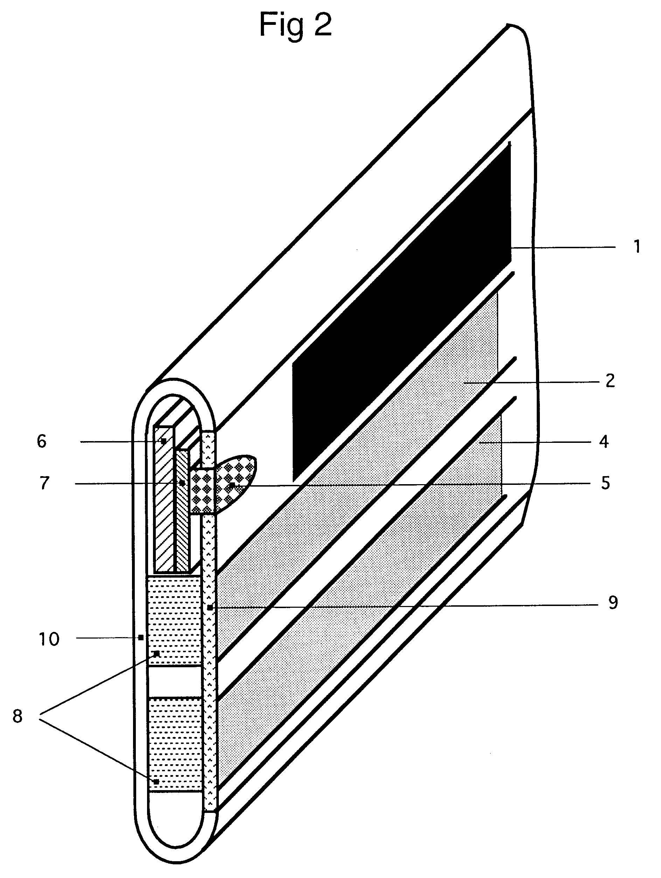

Fig 2 zeigt den Innenaufbau des Etikettes. Der Sensor 5 ist direkt in einem Trägerchip 7 aus Silizium untergebracht, der gleichzeitig zwei Chips für die Modulation/Demodulation und für die elektronische Steuerung trägt. Hinter dem Trägerchip 7 befindet sich der Energiespeicher 6, der entweder als Akkumulator z.B. auf NiCd-Basis oder als Supercap (Mehrschichtkondensator) ausgeführt ist. Die Frontplatte des Etikettes 9 ist in einen Lichtleitkörper 10 eingebettet, der das frontseitig einfallende Licht direkt zu den Schaltzellen 8 führt.

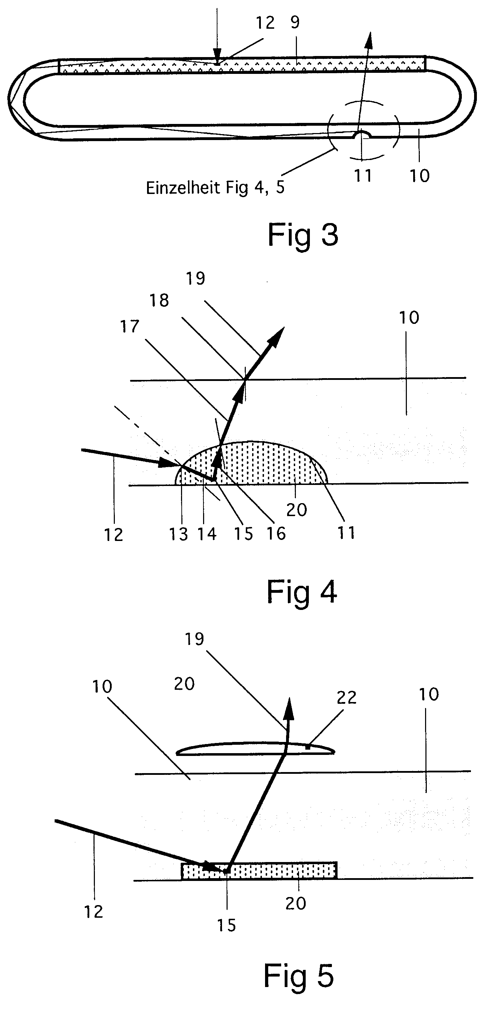

Fig 3 verdeutlicht die Lichtführung. Das einfallende Licht trifft auf Partikel, die in der als Polycarbonatscheibe ausgeführte Frontplatte 9 eingebettet sind. Die Partikel reflektieren das Licht in einem Winkel, der unter dem Grenzwinkel einer Totalreflektion liegt. Damit wird das Licht längs der Frontplatte 9, die übrigens nur die Solarzelle 1 und den Sensor 5 nicht abdeckt, geführt, und an beiden Rändern an der Grenzfläche 11 an den Lichtleitkörper 10 weitergegeben. Die Form des Lichtleitkörpers ist so gestaltet, daß kein Licht an der Rundung austreten kann. Erfindungsgemäß wird dazu ein bestimmtes Verhältnis zwischen Wandungsdicke des Lichtleitkörpers und Krümmungsradius erforderlich.

Das Schaltelement 8 besteht aus einer Elektrodenanordnung 27, 28, 29 und einen in seinen optischen Eigenschaften veränderbaren Polymer 20. Die Auskopplung des Lichtes erfolgt, wie in Fig 4 dargestellt, unter den Schaltelementen 8 durch eine gezielte Störung der Totalreflektion. Vorteilhaft und erfindungsgemäß wird diese Oberflächenstörung in Form einer kleinen kugelförmigen Vertiefung ausgeführt, die in Radius und relativer Lage so ausgeführt wird, daß der Lichtaustritt nahezu parallel mit relativ geringer Apertur erfolgt und damit ein optimaler Wirkungsgrad der Anordnung erreicht wird. Die Vertriefung wirkt dabei wie eine Zerstreuungslinse. Vertiefungen in dieser Art befinden sich dabei hinter jeden Pixel bzw. Balken der Anzeige.

Die Funktionsweise wird anhand des Verlaufes eines Lichtstrahls dargestellt. Der Lichtstrahl 12 fällt auf die kugelförmige Vertiefung, die mit dem STP-Polymer 20 gefüllt ist und die zwischen dem Zustand glasklar und trübe geschaltet werden kann. In einer anderen Ausführung kann die kugelförmige Vertiefung auch mit Polymeren des Types LC gefüllt werden. Im Fall des Zustandes "trübe" wird der Lichtstrahl 14 an den eingelagerten Streukörpern 15 reflektriert, tritt als Lichtstrahl 19 aus dem Lichtleitkörper 10 aus und wird als heller Punkt durch das Auge des Beobachters registriert..

Fig 5 zeigt eine andere Ausführungsform des Schaltelementes 8. Die in diesem Fall flache Vertiefung des Lichtleitkörpers wird dabei ebenfalls verfüllt mit einen niedermolekularen Polymerwerkstoff vom Typ LTP oder LC.

Verschiedene dieser Stoffe besitzen die Eigenschaft, in Abhängigkeit von einem äußeren elektrischen Feld und der Temperatur die optischen Eigenschaften zu verändern z.B. in der Art, daß eine Änderung der Polarisationsebene, ein Umschlag von transparent in eine Farbe oder von Transparent in trüb erfolgt.

In dem gewählten Ausführungsbeispiel wird der Umstand genutzt, daß eine derartige Änderung nur bei einer erhöhten Temperatur erfolgt und im Bereich der Zimmertemperatur der Polymerwerkstoff keine Veränderung durch ein äußeres elektrisches Feld zuläßt. Eine im erwärmten Zustand vorgenommene Änderung der optischen Eigenschaften bleibt auch nach Abschalten des elektrischen Feldes erhalten. Der Vorteil dieser Art von niedermolekularen Polymeren speziell für die Applikation in einem elektronischen Etikett besteht nun darin, daß nach durchgeführter Änderung des Preises oder Artikeltextes die gesamte Steuerung des Etikettes auf einen minimalen Strombedarf zurückgeführt werden kann und damit die durch Solarzelle 1 und Energiespeicherung 6 verfügbare Energie maximal geschont werden kann. Die Fläche der Solarzelle 1 und das Volumen des Energiespeichers 6 kann damit sehr klein gestaltet werden. Damit steht der konkreten Gestaltung des elektronischen Etikettes (Fig. 1) eine große Variabilität zur Verfügung. Auch sehr kleine Etiketten, die z.B. bei der Verwendung von Regalen als Warenträger benötigt werden, können realisiert werden.

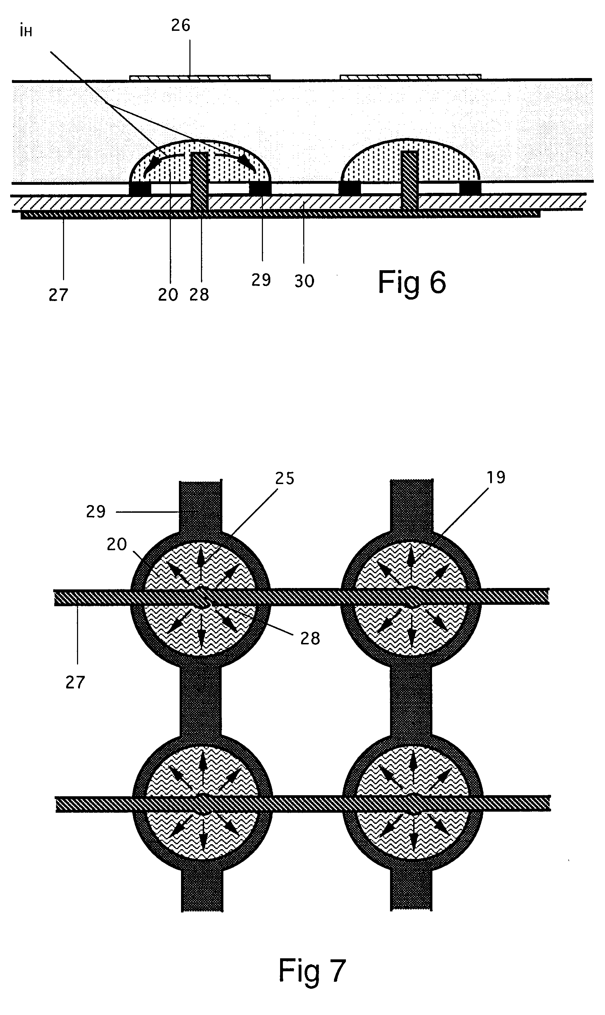

In der Fig 6 wird durch eine bestimmte Anordung von zwei Heizelektroden 28 und 29 bei Anlegen einer Steuerspannung ein Heizstrom i_{H} durch den Polymer erzeugt. Der elektrische Widerstand des Polymers 20 ist durch Dotierung so bestimmt, daß ein Aufheizen des Polymers 20 über die kritische Temperatur ∂₁ erfolgt. Bei Erreichen dieser Grenztemperatur kann durch ein äußeres elektrisches Feld ein Umorientierung der Moleküle erfolgen. Dazu wird der Heizstrom durch den Polymer abgeschaltet und durch Anlegen eines elektrischen Feldes mit Hilfe der Steuerspannung u_{S} zwischen den Elektroden 29 und 26 der gewünschte Effekt erreicht. Zeitlich verzögert erfolgt ein Abschalten des Heizstromes. Nach Erreichen der Temperatur ∂₂ kann auch das Steuerfeld abgeschaltet werden. Der optische Zustand der Schaltzelle bleibt dann erhalten. Die Elektroden 26, 28 und 29 sind als Matrix verschaltet, wie in Fig. 7 zu sehen ist. An den Kreuzungspunkten der mit einander horizontal und vertikal verbundenen Leiterzüge 27 und 29 befinden sich die jeweiligen Schaltzellen 8. Beide Gruppen von Leiterzügen 27 und 29 sind durch eine Isolationsschicht 27 voneinander getrennt. Damit kann eine Adressierung der einzelnen Schaltzelle durch Anwahl einer Spalte und einer Zeile erreicht werden. Der Aufwand für die Elektronik der Ansteuerung kann dadurch vorteilhaft verringert werden. Außerdem wird durch sequentielle Ansteuerung der Schaltelemente der Maximalstrom des Etikettes begrenzt, was der Verwendung einer Supercap als Energiespeicher 6 entgegenkommt.

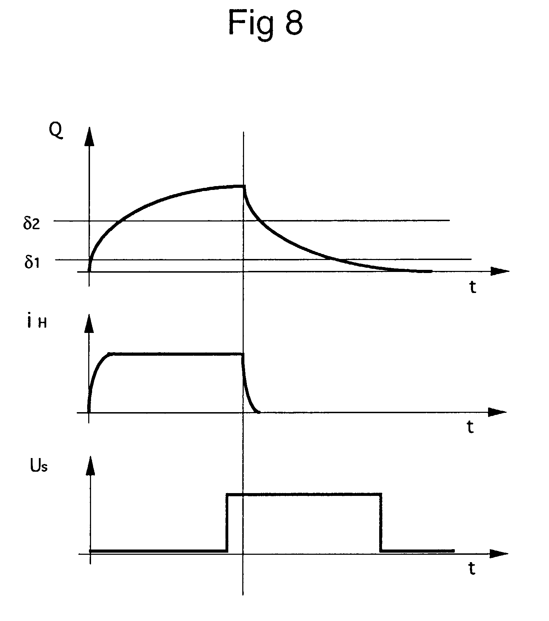

Der zeitliche Verlauf der Steuersignale ist in Fig. 8 dargestellt.

Vorstehend ist die Erfindung anhand ausgewählter Merkmale beschrieben und dargestellt worden. Selbstverständlich ist die Erfindung nicht auf diese Darstellung beschränkt, sondern können sämtliche Merkmale allein oder in beliebiger Kombination, auch unabhängig von ihrer Zusammenfassung in den Ansprüchen, verwendet werden.

## Patentansprüche

1. Elektronisches Etikett mitt mehreren verschiedenen Anzeigebereichen zur Warenkennzeichnung an Warenträgern, das veränderbare alphanumerische und numerische Information anzeigt, über einen Lichtleitkörper eine Hintergrundbeleuchtung erhält, mit einer Zentrale in Verbindung steht und von dieser Information erhält, **dadurch gekennzeichnet**, daß die Anzeigebereiche (2,3 und 4) aus matrixförmig im Lichtleitkörper (10) angeordneten, einzeln ansteuerbaren Schaltzellen (8) bestehen, wobei die Schaltzellen (8) aus Einlagerungen eines niedermolekularen Polymers (20) im Lichtleitkörper (10) und einer in Zeilen und Spalten organisierten Elektrodenanordnung (26, 28, 29) bestehen und wobei der Polymer (20) überdie Elektrodenanordnung (26, 28, 29) durch Einwirkung eines elektrischen Feldes bei gleichzeitiger Einwirkung von Wärme seine optischen Eigenschaften ändert und bei Abkühlung seine über einen Controller eingestellte Information speichert, wobei die Schaltzellen (8) sowie der steuernde Controller lediglich während einer Veränderung der angezeigten Information aktiv ist.

2. Elektronisches Etikett nach Anspruch 1, **dadurch gekennzeichnet**, daß der eingelagerte Polymer (20) ein STP-Polymer ist, der bei Raumtemperature bis max. 40°C sieh im, festen Zustand befindet und hinsichtlich der optischen Eigenschaften im festen Zustand mit seiner eingestellten Information ohne Energiebedarf eingefroren ist.

3. Elektronisches Etikett nach Anspruch 1 and 2, **dadurch gekennzeichnet**, daß die Veränderung der optischen Eigenschaften des Polymers (20) beim Anlegen eines elektrischen Feldes durch Beimengungen zum Polymer (20) von glasklar zu trüb erfolgt.

4. Elektronisches Etikett nach Anspruch 1 bis 3, **dadurch gekennzeichnet**, daß die Veränderung der optischen Eigenschaften des Polymers (20) beim Anlegen eines elktrischen Feldes durch Beimengungen zum Polymer (20) von glasklar zu einer Komplementärfarbe zu den Farben des durch den Lichtleitkörper (10) geleiteten Lichtes erfolgt.

5. Elektronisches Etikett nach Anspruch 1 bis 4, **dadurch gekennzeichnet**, daß die Veränderung der optischen Eigenschaften des Polymers (20) durch Drehung der Polarisationsebene erfolgt.

6. Elektronisches Etikett nach Anspruch 1, **dadurch gekennzeichnet**, daß jedem Pixel der Anzeigebereiche (2, 3, 4) eine einzeln adressierbare Schaltzelle (8) zugeordnet ist.
